(19) Europäisches Patentamt

European Patent Office

Office européen des brevets

(11) **EP 4 123 518 A1**

(12) # EUROPEAN PATENT APPLICATION

(43) Date of publication:
**25.01.2023  Bulletin 2023/04**

(21) Application number: **22184489.7**

(22) Date of filing: **12.07.2022**

(51) International Patent Classification (IPC):
***G06N 20/00*** *(2019.01)*

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021  JP 2021116417**

(71) Applicant: **Canon Medical Systems Corporation Tochigi (JP)**

(72) Inventors:
• **SASAKI, Sho**
  Tochigi (JP)
• **PIAO, Longxun**
  Tochigi (JP)
• **ARITA, Kosuke**
  Tochigi (JP)
• **YAMAZAKI, Yudai**
  Tochigi (JP)
• **NAKATSUGAWA, Minoru**
  Tochigi (JP)

(74) Representative: **Marks & Clerk LLP**
**15 Fetter Lane**
**London EC4A 1BW (GB)**

(54) **INFORMATION PROCESSING DEVICE, INFORMATION PROCESSING SYSTEM, INFORMATION PROCESSING METHOD AND PROGRAM**

(57)    An information processing device of an embodiment for reducing computational resources of a central server and data traffic between the information processing device and the central server includes a first acquirer, a second acquirer, a weight calculator, and an index value calculator. The first acquirer acquires a global model based on data sets regarding a plurality of cohorts. The second acquirer acquires a local model based on a first data set regarding at least one first cohort among the plurality of cohorts. The weight calculator calculates a weight based on a first data distribution with respect to the first data set and a second data distribution with respect to a second data set regarding the plurality of cohorts. The index value calculator calculates an index value regarding the global model on the basis of the first data set and the weight.

FIG. 1

**Description**

FIELD

Embodiments disclosed in the present description and drawings relate to an information processing device, an information processing system, an information processing method, and a program.

BACKGROUND

In the medical field, since data held by clients (also called sites) is highly confidential, distributed learning (online learning) that can construct a model without directly sharing data held by each client is a learning method having high affinity with the medical field. Distributed learning is learning performed using data in a plurality of clients. In distributed learning, for example, a model (local model) learned by each client on the basis of a data set related to a cohort such as patients and a model (global model) obtained by integrating models of respective clients and learning various types of data are used.

The global model is a model based on data sets of multiple cohorts. The global model is generated by a central server or the like on the basis of local models provided by a plurality of clients and is provided to each client. The purpose of constructing a global model is to create a model that has learned various data such that all participating clients can use a high-performance model.

However, in conventional distributed learning, a global model cannot be evaluated in consideration of the tendencies of all data of clients participating in distributed learning, and thus evaluation of the model is performed for each client, for example. Therefore, it is difficult to sufficiently evaluate the performance of a global model used by a client.

Furthermore, in the conventional distributed learning, there are some cases where the accuracy of the global model is decreased when an inappropriate local model is selected in each client and the global model is generated based on the inappropriate local model in the central server. In such cases, the additional distributed learning is needed. In particular, the series of processes in which the central server transmits the global model to each client, receives the local model from each client, and generates the global model, are performed again. Therefore, the computational resources of the central server and the data traffic between the central server and each client are increased.

SUMMARY

The problem to be solved by embodiments disclosed in the present description and drawings is reducing computational resources of a central server and data traffic between the central server and each client. However, the task to be solved by the embodiments disclosed in the present description and the drawings is not limited to the aforementioned task. A task corresponding to each effect according to each configuration shown in an embodiment which will be described later can be positioned as another task.

(1) An information processing device for reducing computational resources of a central server and data traffic between the information processing device and the central server includes: a first acquirer configured to acquire a global model based on data sets regarding a plurality of cohorts; a second acquirer configured to acquire a local model based on a first data set regarding at least one first cohort among the plurality of cohorts; a weight calculator configured to calculate a weight based on a first data distribution with respect to the first data set and a second data distribution with respect to a second data set regarding the plurality of cohorts; and an index value calculator configured to calculate an index value regarding the global model on the basis of the first data set and the weight.

(2) The index value may be an index value for selecting a provided model used to generate the global model, and the information processing device may further includes a first selector configured to select the provided model on the basis of the index value calculated by the index value calculator.

(3) The weight may be a global density ratio calculated on the basis of the first data distribution and the second data distribution.

(4) The information processing device may include a learner configured to train at least one of the global model and the local model using the first data set.

(5) The first selector may select the provided model from a model group including global models and trained global models.

(6) The information processing device may include an integrator configured to integrate a plurality of provided models selected by a plurality of first selectors provided for the plurality of cohorts into a new global model.

(7) The information processing device may include a second selector configured to select an operation local model operated in medical practice from a plurality of models including the global model and the local model.

(8) An information processing system for reducing computational resources of a central server and data traffic between a plurality of information processing devices and the central server includes: the plurality of information processing devices according to claim 1 that collect data sets regarding cohorts and acquire local models based on the data sets; and the central server configured to acquire a global model based on the data sets collected by the plurality of information processing devices, wherein the first acquirer of each of the information processing devices acquires the global model provided by the central server.

(9) The central server may include an integrator configured to integrate the global models provided by the plurality of sites into a new global model.

(10) An information processing method for reducing computational resources of a central server and data traffic between an information processing device and the central server, using then information processing device, includes: acquiring a global model based on data sets regarding a plurality of cohorts; acquiring a local model based on a first data set regarding at least one first cohort among the plurality of cohorts; calculating a weight based on a first data distribution with respect to the first data set and a second data distribution with respect to a second data set regarding the plurality of cohorts; and calculating an index value regarding the global model on the basis of the first data set and the weight.

(11) A program for reducing computational resources of a central server and data traffic between an information processing device and the central server, the program causes the information processing device to: acquire a global model based on data sets regarding a plurality of cohorts; acquire a local model based on a first data set regarding at least one first cohort among the plurality of cohorts; calculate a weight based on a first data distribution with respect to the first data set and a second data distribution with respect to a second data set regarding the plurality of cohorts; and calculate an index value regarding the global model on the basis of the first data set and the weight.

An information processing device of an embodiment includes a first acquirer, a second acquirer, a weight calculator, and an index value calculator. The first acquirer acquires a global model based on data sets regarding a plurality of cohorts. The second acquirer acquires a local model based on a first data set regarding at least one first cohort among the plurality of cohorts. The weight calculator calculates a weight based on a first data distribution with respect to the first data set and a second data distribution with respect to a second data set regarding the plurality of cohorts. The index value calculator calculates an index value regarding the global model on the basis of the first data set and the weight.

BRIEF DESCRIPTION OF THE DRAWINGS

FIG. 1 is a configuration diagram of an information processing system 1 of an embodiment.
FIG. 2 is a configuration diagram of a site 100.
FIG. 3 is a configuration diagram of a central server 200.
FIG. 4 is a sequence diagram showing the flow of processing of the site 100 and the central server 200.
FIG. 5 is a diagram showing an image of calculation and transmission of data distribution.
FIG. 6 is a diagram showing an image for obtaining a global density ratio.

DETAILED DESCRIPTION

Hereinafter, an information processing device, an information processing system, an information processing method, and a program of embodiments will be described with reference to the drawings.

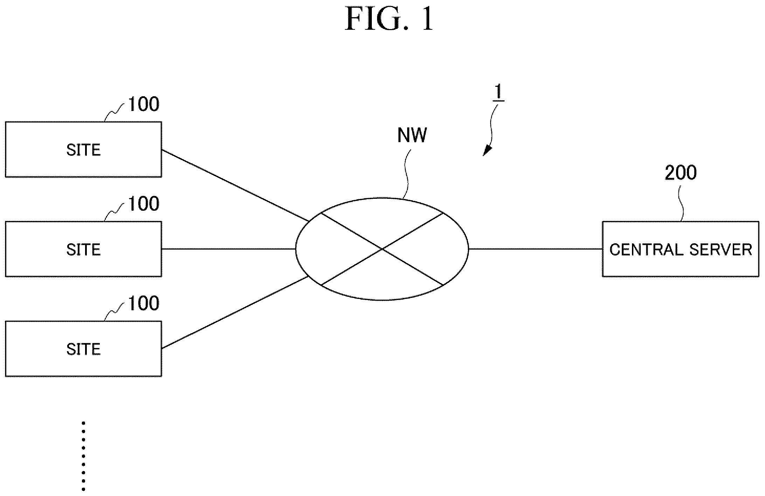

FIG. 1 is a configuration diagram of the information processing system 1 of an embodiment. The information processing system 1 includes, for example, a plurality of sites 100 and a central server 200. The plurality of sites 100 are connected to the central server 200 via a communication network NW such that they can transmit/receive data to/from the central server 200. The central server 200 generates a global model according to distributed learning using training data acquired by the plurality of sites 100 and provides the global model to the plurality of sites 100.

The communication network NW refers to all information communication networks using telecommunications technology. The communication network NW includes a telephone communication line network, an optical fiber communication network, a cable communication network, a satellite communication network, and the like in addition to a wireless/wired LAN such as a hospital backbone local area network (LAN) and the Internet.

The site 100 represents, for example, an information processing device provided in a medical facility. The site 100 collects and provides, for example, information about treatment and diagnosis in a medical facility. The central server 200 is provided in, for example, a facility other than the medical facility. The central server 200 collects information on the site 100, analyzes the collected information to generate information to be provided to the medical facility, and transmits the generated information to the site 100 to provide the information to the medical facility. The central server 200 may be provided in a medical facility.

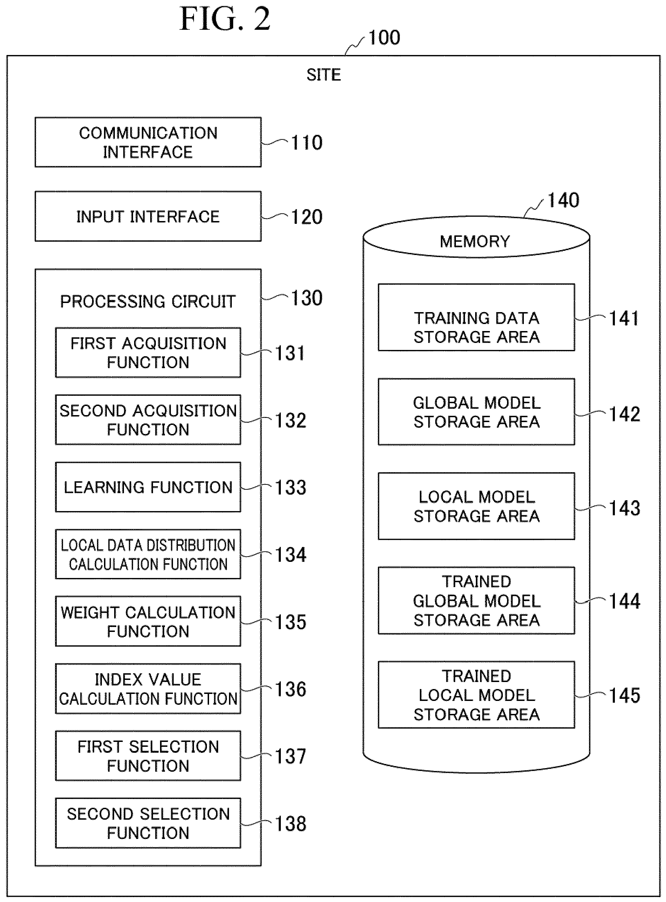

FIG. 2 is a configuration diagram of the site 100. The site 100 includes, for example, a communication interface 110, an input interface 120, a processing circuit 130, and a memory 140. The communication interface 110 communicates with an external device, for example, the central server 200, via the communication network NW. The communication interface 110 includes, for example, a communication interface such as a network interface card (NIC).

The input interface 120 receives various input operations performed by an operator and outputs electric signals indicating details of the received input operations to the processing circuit 130. The input interface 120 is realized by, for example, a mouse, a keyboard, a touch panel, a track ball, a switch, a button, a joystick, a camera, an infrared sensor, a microphone, and the like.

In the present description, the input interface is not limited to one provided with physical operation parts such as a mouse and a keyboard. For example, examples of the input interface also include an electric signal processing circuit that receives an electric signal corresponding to an input operation from an external input apparatus provided separately from the device and outputs an electric signal to the control circuit.

The processing circuit 130 includes, for example, a processor such as a central processing unit (CPU). The processing circuit 130 controls the overall operation of the site 100. The processing circuit 130 includes, for example, a first acquisition function 131, a second acquisition function 132, a learning function 133, a local data distribution calculation function 134, an index value calculation function 136, a first selection function 137, and a second selection function 138. The processing circuit 130 realizes these functions by, for example, a hardware processor executing a program stored in a storage device (storage circuit).

The hardware processor refers to, for example, a circuit (circuitry) such as a central processing unit (CPU), a graphics processing unit (GPU), an application specific integrated circuit (ASIC), and a programmable logic device (for example, a simple programmable logic device (SPLD) or a complex programmable logic device (CPLD)), and a field programmable gate array (FPGA). The program may be directly embedded in the circuit of the hardware processor instead of being stored in a storage device. In this case, the hardware processor realizes functions by reading and executing the program embedded in the circuit. The hardware processor is not limited to a single circuit, and may be configured as one hardware processor by combining a plurality of independent circuits to realize each of functions. The storage device may be a non-temporary (hardware) storage medium. Further, a plurality of components may be integrated into one hardware processor to realize each function.

Each component of the processing circuit 130 may be decentralized and realized by a plurality of hardware devices. The processing circuit 130 may be realized by a processing device capable of communicating with the site 100 instead of being a component included in the site 100. Each function included in the processing circuit 130 may be distributed to a plurality of circuits or may be available by activating application software stored in the memory 140.

The memory 140 is included in the storage device. The memory 140 is provided with a training data storage area 141, a global model storage area 142, a local model storage area 143, a trained global model storage area 144, and a trained local model storage area 145. The training data storage area 141 stores training data for generating a local model. The training data includes a data set regarding a cohort such as a patient in a medical facility where the site 100 is provided. This training data is, for example, data used when a local model has been recently generated. A cohort such as a patient in the medical facility where the site 100 is provided is an example of a first cohort. A data set regarding the first cohort is an example of a first data set.

A plurality of global models are stored in the global model storage area 142. A plurality of local models are stored in the local model storage area 143. A plurality of trained global models are stored in the trained global model storage area 144. A trained global model is a model obtained by training a global model using training data stored in the training data storage area 141. A plurality of trained local models are stored in the trained local model storage area 145. A trained local model is a model obtained by training a local model using training data stored in the training data storage area 141.

The first acquisition function 131 acquires a global model transmitted and provided by the central server 200 and received by the communication interface 110. The first acquisition function 131 stores the acquired global model in the global model storage area 142 of the memory 140. By storing the global model from the first acquisition function 131, the number of global models stored in the global model storage area 142 increases each time.

The second acquisition function 132 acquires a model selected by the second selection function 138 as a local model. The second acquisition function 132 stores the acquired local model in the local model storage area 143 of the memory 140. By storing the local model by the second acquisition function 132, the number of local models stored in the local model storage area 143 increases each time.

The learning function 133 trains a global model acquired by the first acquisition function 131 by machine learning, deep learning, or the like using training data stored in the training data storage area 141 of the memory 140 to generate a trained global model. The learning function 133 stores the generated trained global model in the trained global model storage area 144 of the memory 140. By the learning function 133 storing the trained global model, the number of trained global models stored in the trained global model storage area 144 increases each time. The learning function 133 is an example of a learner.

The learning function 133 trains a local model acquired by the second acquisition function 132 by machine learning, deep learning, or the like using training data stored in the training data storage area 141 of the memory 140 to generate a trained local model. The learning function 133 stores the generated trained local model in the trained local model storage area 145 of the memory 140. By storing the trained local model by the learning function 133, the number of trained local models stored in the trained local model storage area 145 increases each time.

The local data distribution calculation function 134 calculates a local data distribution of a data set regarding a cohort on the basis of training data stored in the training data storage area 141 of the memory 140. The local data distribution calculation function 134 transmits the calculated local data distribution to the central server 200 using the communication interface 110. The local data distribution is an example of a first data distribution.

The weight calculation function 135 calculates a weight used at the time of calculating an index value related to a global model on the basis of a local data distribution calculated by the local data distribution calculation function 134 and a global data distribution transmitted by the central server 200. The weight will be described later.

The index value calculation function 136 calculates index values of global models, local models, trained global models, and trained local models (hereinafter, model group) stored in the memory 140. An index value related to a global model is, for example, an index value serving as a standard for selecting a model provided to the central server 200 (hereinafter referred to as a provided model) as a model used to generate a global model or representing suitability as a model (hereinafter, an operation model) operated for medical practice at the site 100. The index value calculation function 136 is an example of an index value calculator. The operation model is an example of an operation local model.

The first selection function 137 selects a provided model from a model group including global models and trained global models on the basis of the index value of each model of a model group calculated by the index value calculation function 136. The first selection function 137 transmits the selected provided model to the central server 200 using the communication interface 110. The first selection function 137 is an example of the first selector.

The second selection function 138 selects an operation model from model groups stored in the memory 140. At the site 100, various types of processing executed in the site 100 are operated using the operation model selected by the second selection function 138. The operation model may be appropriately selected using a known model evaluation method. The second selection function 138 is an example of a second selector.

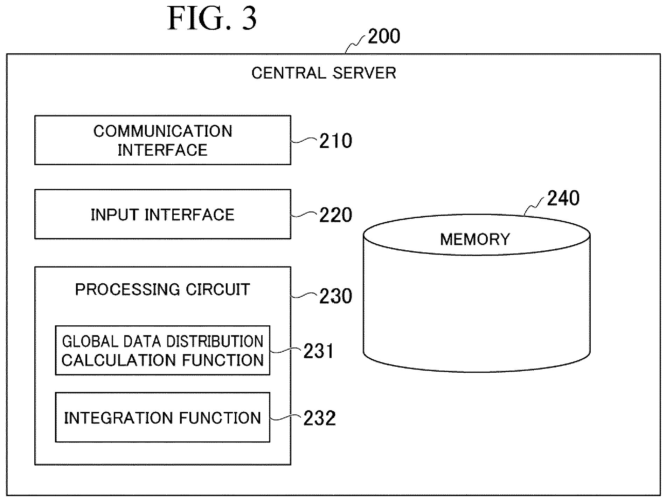

FIG. 3 is a configuration diagram of the central server 200. The central server 200 is provided in, for example, a management facility that centrally manages information provided by a plurality of sites 100 or provided to a plurality of sites 100. The central server 200 includes, for example, a communication interface 210, an input interface 220, a processing circuit 230, and a memory 240. The communication interface 210 communicates with an external device, for example, a plurality of sites 100 via the communication network NW.

The communication interface 210 includes, for example, a communication interface such as a NIC. Distribution data and provided models are transmitted to the central server 200 by a plurality of sites 100. Accordingly, a plurality of pieces of distribution data and provided models are transmitted to the central server 200. The input interface 220 receives various input operations performed by an operator and outputs electric signals indicating details of the received input operations to the processing circuit 230.

The processing circuit 230 includes a processor such as a CPU, for example. The processing circuit 230 controls the overall operation of the central server 200. The processing circuit 230 includes, for example, a global data distribution calculation function 231 and an integration function 232. The processing circuit 230 realizes these functions by, for example, a hardware processor executing a program stored in a storage device (storage circuit).

Each component of the processing circuit 230 may be decentralized and realized by a plurality of hardware devices. The processing circuit 230 may be realized by a processing device capable of communicating with the central server 200 instead of being a component included in the central server 200. Each function included in the processing circuit 230 may be distributed to a plurality of circuits or may be available by activating application software stored in the memory of the central server 200. Information such as a global data distribution and global models is stored in the memory 240.

The global data distribution calculation function 231 calculates a global data distribution on the basis of a local data distribution of a plurality of data sets regarding each of a plurality of cohorts transmitted by the plurality of sites 100. The global data distribution is a distribution that integrates local data distributions of a plurality of data sets. A plurality of data sets regarding a plurality of cohorts are an example of a second data set. The global data distribution is an example of a second data distribution.

The global data distribution calculation function 231 transmits the calculated global data distribution to the plurality of sites 100 using the communication interface 210. Each site 100 that has received the global data distribution calculates a weight using the received global data distribution in the weight calculation function 135. At the time of transmitting the global data distribution to the plurality of sites 100, the global data distribution calculation function 231 transmits global models stored in the memory 240 along with the global data distribution.

The integration function 232 integrates a plurality of provided models transmitted by the plurality of sites 100 to generate a new global model. The integration function 232 deletes already stored global models at the time of storing the newly generated global model in the memory 240. The integration function may store the newly generated global model without deleting the already stored global models. The integration function 232 is an example of an integrator.

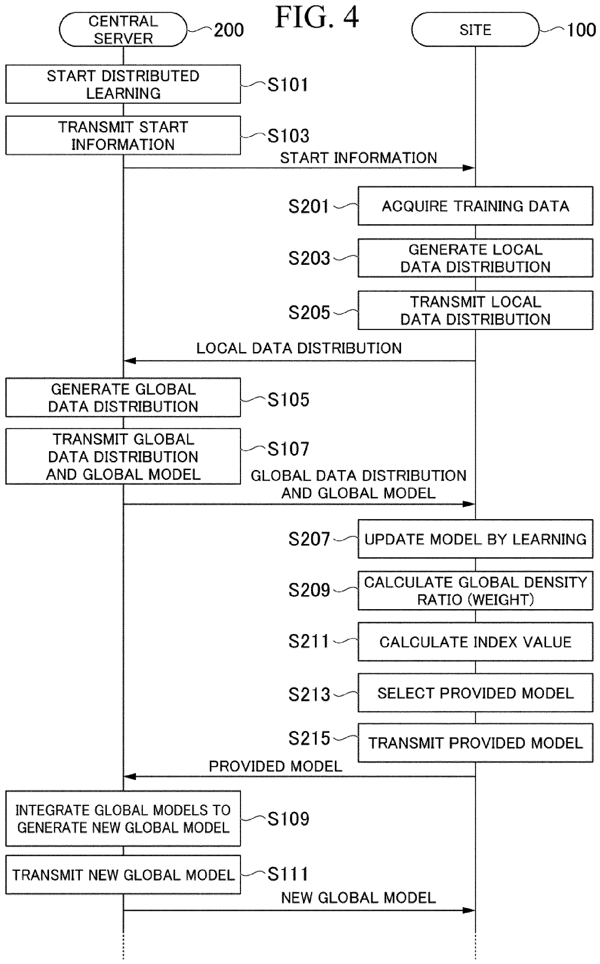

Next, processing in the information processing system 1 will be described. FIG. 4 is a sequence diagram showing a flow of processing of the site 100 and the central server 200. For example, in the central server 200, distributed learning is started by an operator executing operation of the input interface 220 indicating start of distributed learning (step S101). When distributed learning is started, the central server 200 transmits start information to each of a plurality of sites using the communication interface 210 (step S103).

Each site 100 that has received the start information acquires training data stored in the training data storage area 141 of the memory 140 in the local data distribution calculation function 134 (step S201). Subsequently, the site 100 calculates a local data distribution of various types of data included in the training data in the local data distribution calculation function 134 (step S203).

The local data distribution is, for example, a distribution when data included in the training data is aggregated for each item, for example. Any item may be used and, for example, attributes of a patient, such as the age, gender, and physique of a patient, a doctor in charge, the name of a disease, symptoms, a date and time, a season, and the like can be conceived. The local data distribution calculation function 134 transmits the calculated local data distribution to the central server 200 using the communication interface 110 (step S205).

The local data distribution calculation function 134 calculates the local data distribution, for example, by performing parametric estimation or nonparametric estimation with respect to the training data. A plurality of local data distributions are transmitted to the central server 200 by the plurality of sites 100. The central server 200 calculates a global data distribution by collecting the transmitted plurality of local data distributions in the global data distribution calculation function 231 (step S105).

The global data distribution calculation function 231 transmits the calculated global data distribution to each site 100 using the communication interface 210 (step S107). At the time of transmitting the global data distribution, the global data distribution calculation function 231 also transmits a global model stored in the memory 240 to each site 100.

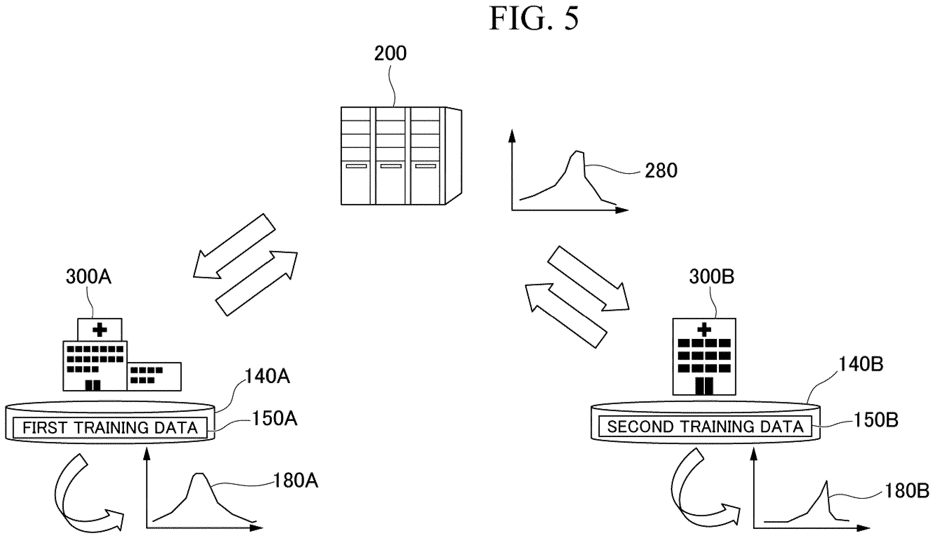

FIG. 5 is a diagram showing an image of data distribution calculation and transmission. At each site 100, a local data distribution is calculated on the basis of training data stored in the memory 140. For example, in a first medical facility 300A, a first local data distribution 180A is calculated by parametric estimation or non-parametric estimation on the basis of first training data 150A stored in a first memory 140A.

Similarly, in a second medical facility 300B, a second local data distribution 180B is calculated by parametric estimation or non-parametric estimation on the basis of second training data 150B stored in a second memory 140B. Both the first local data distribution 180A and the second local data distribution 180B are represented by, for example, a probability density function.

Both the first local data distribution 180A and the second local data distribution 180B are transmitted to the central server 200. The global data distribution calculation function 231 of the central server 200 calculates a global data distribution 280 on the basis of the transmitted first local data distribution 180A and second local data distribution 180B. The global data distribution 280 calculated by the central server 200 is transmitted to the site 100 provided in the first medical facility 300A and the second medical facility 300B.

Referring back to FIG. 4, the site 100 receives the global data distribution and the global model transmitted by the central server 200. The site 100 updates the received global model by learning such as machine learning using training data stored in the training data storage area 141 of the memory 140 in the learning function 133 (step S207) to generate a trained global model.

At this time, the learning function 133 updates a latest local model among the local models stored in the local model storage area 143 by learning such as machine learning using training data stored in the training data storage area 141 (step S207) to generate a trained local model. The trained local model may be generated at a timing different from generation of the trained global model. The learning function 133 stores the generated trained global model and trained local model in the trained global model storage area 144 and the trained local model storage area 145, respectively.

Subsequently, the site 100 calculates a global density ratio as a weight in the weight calculation function 135 on the basis of the global data distribution transmitted by the central server 200 and a local data distribution stored in the memory 140 (step S209). The weight calculation function 135 calculates the global density ratio by calculating the ratio of the global data distribution to the local data distribution.

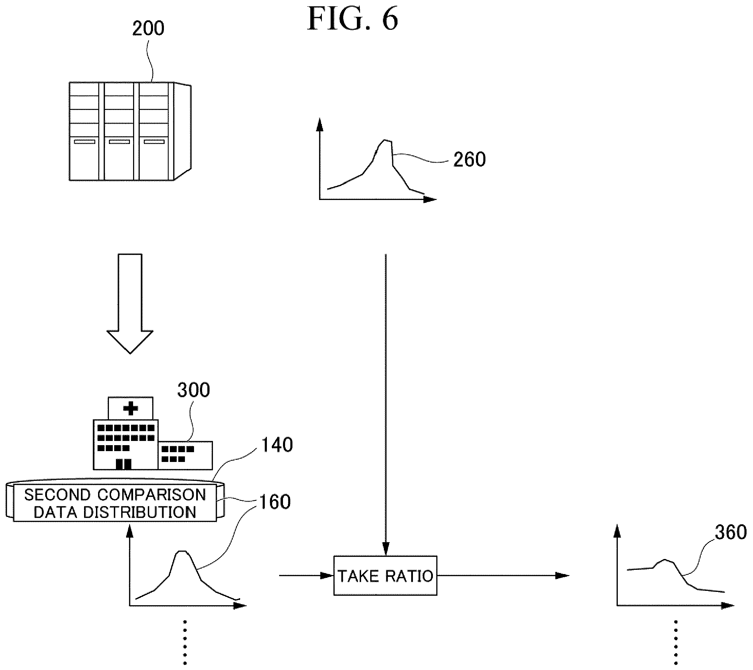

FIG. 6 is a diagram showing an image for obtaining a global density ratio. The central server 200 transmits a global data distribution 260 calculated by the global data distribution calculation function 231 to the site 100 provided in a medical facility 300. A local data distribution 160 is stored in the site 100. The weight calculation function 135 obtains a global density ratio 360 by taking a ratio of both distributions with the global data distribution as the denominator and the local data distribution as the numerator.

Next, the index value calculation function 136 obtains an error of each model using training data stored in the training data storage area 141 and the weight calculated by the weight calculation function 135, for example, according to an importance weighted cross-validation method. The global density ratio corresponds to an importance in the importance weighted cross-validation method. By using the importance weighted cross-validation method, it is possible to calculate a model error while bringing the local data distribution 160 stored in the memory 140 of the site 100 closer to the global data distribution 260.

The importance weighted cross-validation method will be described. The index value calculation function 136 first randomly divides training data T constituting a local data distribution into m subsets having a size of no overlap or almost no overlap. The training data T is represented by the following formula (1), and the subset is represented by the following formula (2).

$$T = \left\{ \left( x_i, y_i \right) \right\}_{i=1}^{n} \qquad \cdots (1)$$

$$\left\{ T_i \right\}_{i=1}^{m} \qquad \cdots (2)$$

In the above formula (1), x represents input data and y represents output data.

After dividing the training data T, the index value calculation function 136 repeats the following processing (a) and (b) for i = 1, 2, ..., m.

(a) A function fi of a training result is obtained using all data other than training data $T_i$ represented by the following formula (3).
(b) A general-purpose error for the saved training data $T_i$ is calculated. The general-purpose error $\hat{G}_i$ is represented by the following formula (4).

$$T \setminus T_i \qquad \cdots (3)$$

$$\hat{G}_i = \begin{cases} \dfrac{1}{|T_i|} \displaystyle\sum_{(x,y) \in T_i} \omega(x) \left( f_i(x) - y \right)^2 & \text{(Regression)} \\[4mm] \dfrac{1}{|T_i|} \displaystyle\sum_{(x,y) \in T_i} \dfrac{\omega(x)}{2} \left( 1 - sign \left( f_i(x) y \right) \right) & \text{(Classification)} \end{cases} \qquad \cdots (4)$$

In the above formula (4), $|T_i|$ represents the number of elements of the set $T_i$, and $\omega(x)$ represents importance (global density ratio).

The index value calculation function 136 calculates a general-purpose error for each divided training data $T_i$, and then calculates an index value using an average value of general-purpose errors of all training data $T_i$ as a final predicted value of the general-purpose errors (step S211). The average value of the general-purpose errors is represented by the following formula (5). The average value of the general-purpose errors (predicted value of the general-purpose errors) is an index value at the time of selecting a provided model.

$$\hat{G} = \frac{1}{m} \sum_{i=1}^{m} \hat{G}_i \qquad \cdots (5)$$

The index value calculation function 136 calculates an index value for each model included in a model group. The first selection function 137 compares average values of general-purpose errors calculated for respective models. The first selection function 137 selects a model having a smallest average value of general-purpose errors as a provided model (step S213).

After selecting the provided model, the first selection function 137 transmits the selected provided model to the central server 200 (step S215). The plurality of sites 100 respectively transmit provided models to the central server 200. The central server 200 integrates a plurality of provided models transmitted by the plurality of sites 100 in the integration function 232 to generate a new global model (step S109). The integration function 232 transmits the generated new global model to each site 100 using the communication interface 210 (step Sill). In this way, the information processing system 1 ends processing shown in FIG. 4.

In the information processing system of the embodiment, a global model is generated by integrating provided models provided by the plurality of sites 100. Therefore, a global model that reflects features of each of the plurality of sites 100 is generated. For example, one site installed in a medical facility with many young people provides a provided model based on data including a lot of data obtained from young people, and another site installed in a medical facility with many women provides a provided model based on data including a lot of data obtained from women. Therefore, it is possible to generate a global model considering tendency of training data for each site 100.

Further, in the information processing system of the embodiment, an index value for selecting a provided model to be provided to the central server 200 is calculated on the basis of a global data distribution (weight) and a local data distribution. Therefore, an index value in consideration of the global data distribution (weight) can be calculated, and thus the accuracy of evaluating a global model generated by the central server 200 can be improved. Furthermore, it is possible to prevent the decreasing of the accuracy of the global model and the additional distributed learning. Therefore, it is possible to reduce the computational resources of the central server and the data traffic between the central server and each client (each site).

Further, in the information processing system of the embodiment, a provided model to be provided to the central server 200 is selected using an index value considering a global data distribution (weight). Therefore, it is possible to provide the central server 200 with a model close to a global model obtained by integrating a plurality of provided models (global models) provided by a plurality of sites 100.

Although the information processing system includes the site 100 and the central server 200 in the above embodiment, the site 100 in which the components of the central server 200 are combined may serve as an information processing device. In this case, components provided in the plurality of sites may be combined into one site, training data may be transmitted from the other sites, and a model in another site may be generated in one site.

Although the index value calculation function 136 uses an error included in a global data distribution as an index value in the above embodiment, the index value does not have to be an error and may be, for example, an accuracy. Although the first selection function 137 selects a provided model on the basis of the index value and transmits the provided model to the central server 200, the first selection function 137 or the index value calculation function 136 may transmit the index value to the central server 200.

Although the local data distribution calculation function 134 uses a global density ratio as a weight for calculating an index value in the above embodiment, the weight is not limited to the global data distribution. The weight may be, for example, the ratio of the amount of data in the local data distribution to the amount of data in the global data distribution or may be a rate of loss.

Although the index value calculation function 136 calculates an index value as an index for selecting a provided model in the above embodiment, for example, an index value of a global model transmitted by the central server 200 may be calculated. In this case, the index value calculation function 136 can evaluate the global model by the calculated index value. The site 100 may transmit and provide the calculated index value of the global model to the central server 200 or another site 100.

Although a global density ratio as a weight is calculated in the site 100 in the above embodiment, a weight such as a global density ratio may be calculated by a component other than the site 100. For example, the central server 200 has a local data distribution transmitted by the site 100 and a calculated global data distribution. Therefore, a weight such as a global density ratio may be calculated by the central server 200 and transmitted to the site 100.

For example, the site 100 updates a global model and a local model using training data stored in the training data storage area 141 in step S207 in FIG. 4, and subsequently calculates a global density ratio in step S209. On the other hand, the site 100 may change the order of steps S207 and S209 in FIG. 4, calculate the global density ratio before updating the global model, and update at least one of a global model and a local model stored in the memory 140 using at least one of the calculated global model density ratio and each data distribution.

By updating the global model or the local model using the global model density ratio, it is possible to obtain the same effect as so-called covariate shift adaptive learning in which a density ratio is taken into account at the time of calculating a loss function. Therefore, a model trained through covariate shift adaptive learning can be included as a candidate for the provided model selected in step S213. Under the assumption that the calculated global density ratio is 100% correct, a model trained through covariate shift adaptive learning will always be selected as a provided model, but in reality, it is desirable that a model trained through covariate shift adaptive learning be a candidate for the provided model because errors and the like are included.

According to at least one embodiment described above, it is possible to reduce computational resources of a central server and data traffic between the central server and each client by including a first acquirer configured to acquire a global model based on data sets regarding a plurality of cohorts, a second acquirer configured to acquire a local model based on a first data set regarding at least one of the plurality of first cohorts, a weight calculator configured to calculate a weight based on a first data distribution with respect to the first data set and a second data distribution with respect to a second data set regarding the plurality of cohorts, and an index value calculator configured to calculate an index value regarding the global model on the basis of the first data set and the weight.

Although several embodiments have been described, these embodiments are presented as examples and are not intended to limit the scope of the invention. These embodiments can be implemented in various other embodiments, and various omissions, replacements, and changes can be made without departing from the gist of the invention. These embodiments and modifications thereof are included in the scope of the invention described in the claims and the equivalent scope thereof, as are included in the scope and gist of the invention.

## Claims

1. An information processing device (130) for reducing computational resources of a central server (200) and data traffic between the information processing device (130) and the central server (200), comprising:

    a first acquirer (131) configured to acquire a global model based on data sets regarding a plurality of cohorts;
    a second acquirer (132) configured to acquire a local model based on a first data set regarding at least one first cohort among the plurality of cohorts;
    a weight calculator (135) configured to calculate a weight based on a first data distribution with respect to the first data set and a second data distribution with respect to a second data set regarding the plurality of cohorts; and
    an index value calculator (136) configured to calculate an index value regarding the global model on the basis of the first data set and the weight.

2. The information processing device (130) according to claim 1, wherein the index value is an index value for selecting a provided model used to generate the global model, and the information processing device further comprises a first selector (137) configured to select the provided model on the basis of the index value calculated by the index value calculator.

3. The information processing device (130) according to claim 1 or 2, wherein the weight is a global density ratio calculated on the basis of the first data distribution and the second data distribution.

4. The information processing device (130) according to claim 1, further comprising a learner (133) configured to train at least one of the global model and the local model using the first data set.

5. The information processing device (130) according to claim 2, wherein the first selector (137) selects the provided model from a model group including global models and trained global models.

6. The information processing device (130) according to claim 5, further comprising an integrator configured to integrate a plurality of provided models selected by a plurality of first selectors provided for the plurality of cohorts into a new global model.

7. The information processing device (130) according to any one of claims 1 to 6, further comprising a second selector (138) configured to select an operation local model operated in medical practice from a plurality of models including the global model and the local model.

8. An information processing system for reducing computational resources of a central server (200) and data traffic between a plurality of information processing devices (130) and the central server (200), comprising:

    the plurality of information processing devices (130) according to claim 1, configured to collect data sets regarding cohorts and acquire local models based on the data sets; and
    the central server (200) configured to acquire a global model based on the data sets collected by the plurality of information processing devices (130),
    wherein the first acquirer (131) of each of the information processing devices (100) acquires the global model provided by the central server (200).

9. The information processing system according to claim 8, wherein the central server (200) further includes an integrator (232) configured to integrate the global models provided by the plurality of sites into a new global model.

10. An information processing method for reducing computational resources of a central server (200) and data traffic between an information processing device (130) and the central server (200), using the information processing device (130), comprising:

acquiring a global model based on data sets regarding a plurality of cohorts;
acquiring a local model based on a first data set regarding at least one first cohort among the plurality of cohorts;
calculating a weight based on a first data distribution with respect to the first data set and a second data distribution with respect to a second data set regarding the plurality of cohorts; and
calculating an index value regarding the global model on the basis of the first data set and the weight.

**11.** A program for reducing computational resources of a central server (200) and data traffic between an information processing device (130) and the central server (200), the program causing the information processing device (130) to:

acquire a global model based on data sets regarding a plurality of cohorts;
acquire a local model based on a first data set regarding at least one first cohort among the plurality of cohorts;
calculate a weight based on a first data distribution with respect to the first data set and a second data distribution with respect to a second data set regarding the plurality of cohorts; and
calculate an index value regarding the global model on the basis of the first data set and the weight.

# FIG. 1

EP 4 123 518 A1

# FIG. 2

~100

SITE

| COMMUNICATION INTERFACE | ~110 |

| INPUT INTERFACE | ~120 |

PROCESSING CIRCUIT ~130

| FIRST ACQUISITION FUNCTION | ~131 |

| SECOND ACQUISITION FUNCTION | ~132 |

| LEARNING FUNCTION | ~133 |

| LOCAL DATA DISTRIBUTION CALCULATION FUNCTION | ~134 |

| WEIGHT CALCULATION FUNCTION | ~135 |

| INDEX VALUE CALCULATION FUNCTION | ~136 |

| FIRST SELECTION FUNCTION | ~137 |

| SECOND SELECTION FUNCTION | ~138 |

~140

MEMORY

| TRAINING DATA STORAGE AREA | ~141 |

| GLOBAL MODEL STORAGE AREA | ~142 |

| LOCAL MODEL STORAGE AREA | ~143 |

| TRAINED GLOBAL MODEL STORAGE AREA | ~144 |

| TRAINED LOCAL MODEL STORAGE AREA | ~145 |

# FIG. 3

/200

CENTRAL SERVER

| COMMUNICATION INTERFACE | ~210 |

| INPUT INTERFACE | ~220 |

/240

MEMORY

PROCESSING CIRCUIT ~230

| GLOBAL DATA DISTRIBUTION CALCULATION FUNCTION | ~231 |

| INTEGRATION FUNCTION | ~232 |

# FIG. 4

| CENTRAL SERVER ~200 | | SITE ~100 |
|---|---|---|

**S101** START DISTRIBUTED LEARNING

**S103** TRANSMIT START INFORMATION

→ START INFORMATION →

**S201** ACQUIRE TRAINING DATA

**S203** GENERATE LOCAL DATA DISTRIBUTION

**S205** TRANSMIT LOCAL DATA DISTRIBUTION

← LOCAL DATA DISTRIBUTION

**S105** GENERATE GLOBAL DATA DISTRIBUTION

**S107** TRANSMIT GLOBAL DATA DISTRIBUTION AND GLOBAL MODEL

→ GLOBAL DATA DISTRIBUTION AND GLOBAL MODEL →

**S207** UPDATE MODEL BY LEARNING

**S209** CALCULATE GLOBAL DENSITY RATIO (WEIGHT)

**S211** CALCULATE INDEX VALUE

**S213** SELECT PROVIDED MODEL

**S215** TRANSMIT PROVIDED MODEL

← PROVIDED MODEL

**S109** INTEGRATE GLOBAL MODELS TO GENERATE NEW GLOBAL MODEL

**S111** TRANSMIT NEW GLOBAL MODEL

→ NEW GLOBAL MODEL →

FIG. 5

EP 4 123 518 A1

EP 4 123 518 A1

FIG. 6

Europäisches
Patentamt

European
Patent Office

Office européen
des brevets

# EUROPEAN SEARCH REPORT

**Application Number**

EP 22 18 4489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAYEE CHEN ET AL: "Mandoline: Model Evaluation under Distribution Shift", ARXIV.ORG, CORNELL UNIVERSITY LIBRARY, 201 OLIN LIBRARY CORNELL UNIVERSITY ITHACA, NY 14853, 1 July 2021 (2021-07-01), XP091006440, * abstract * * page 2 - page 10 * * page 19 - page 31 * ----- | 1-11 | INV. G06N20/00 |
| A | CHEN SENTAO ET AL: "Tailoring density ratio weight for covariate shift adaptation", NEUROCOMPUTING, vol. 333, 31 December 2018 (2018-12-31), pages 135-144, XP085586861, ISSN: 0925-2312, DOI: 10.1016/J.NEUCOM.2018.11.082 * the whole document * ----- | 1-11 | |

|  |
|---|
| TECHNICAL FIELDS SEARCHED (IPC) |
| G06N |

The present search report has been drawn up for all claims

| Place of search | Date of completion of the search | Examiner |
|---|---|---|
| The Hague | 6 December 2022 | Tsakonas, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)